# EUROPEAN PATENT APPLICATION

(11) **EP 4 201 994 A1**
(43) Date of publication of application: **28.06.2023**
(21) Application number: 21858090.0
(22) Date of filing: 16.07.2021
(51) Int. Cl.: C08L 23/04, C08K 3/04

(54) **ETHYLENE-BASED POLYMER COMPOSITION AND USE APPLICATION THEREOF**

(30) Priority: 18.08.2020 JP 2020138248; 04.03.2021 JP 2021034411
(71) Applicant: Mitsui Chemicals, Inc., Tokyo 104-0028 (JP)
(72) Inventor: KOMATSU, Chihiro, Sodegaura-shi, Chiba 299-0265 (JP); NAKANO, Makoto, Sodegaura-shi, Chiba 299-0265 (JP); FUKAGAWA, Yoshisada, Sodegaura-shi, Chiba 299-0265 (JP); FUJIMURA, Futoshi, Sodegaura-shi, Chiba 299-0265 (JP); YAMADA, Takahiro, Tokyo 105-7122 (JP); ENDO, Keisuke, Sodegaura-shi, Chiba 299-0265 (JP)
(74) Representative: J A Kemp LLP
(86) International application number: PCT/JP2021/026764
(87) International publication number: WO 2022/038941

(57) **Abstract**

An object of the present invention is to obtain an ethylene-based polymer composition useful as a material for shaped articles having a low surface resistivity and a low volume resistivity and exhibiting excellent slidability. The present invention pertains to an ethylene-based polymer composition containing an ethylene-based polymer (A) and a carbon-based filler (C), the ethylene-based polymer composition having a melt flow rate (MFR) in the range of 0.1 to 20 g/10 min as measured in accordance with JIS K7210-1: 2014 at a measurement temperature of 230°C under a load of 10 kgf.

## Description

### Technical Field

The present invention relates to an ethylene-based polymer composition useful as a material for highly conductive and excellently slidable shaped articles, and to use applications of the composition.

### Background Art

Ethylene-based polymers with a very high molecular weight, so-called ultrahigh-molecular weight ethylene-based polymers, are superior to general-purpose ethylene-based polymers in impact resistance, wear resistance, chemical resistance and strength, and have excellent characteristics as engineering plastics.

As known in the art, such ultrahigh-molecular weight ethylene-based polymers are obtained using a known catalyst such as a so-called Ziegler catalyst composed of a halogen-containing transition metal compound and an organometallic compound, or a magnesium compound-supported catalyst.

It is accepted that due to their high molecular weights, ultrahigh-molecular weight ethylene-based polymers are difficult to shape by a melt-forming method that is a general resin shaping method. Ram extrusion has been generally used to fabricate shaped articles from ultrahigh-molecular weight ethylene-based polymers (Patent Document 1).

As an approach to improving the slidability and mechanical properties of ethylene-based polymers, it is suggested to disperse cellulose fibers in an ethylene-based polymer (Patent Document 2).

On the other hand, ethylene-based polymer compositions are further required to have improved conductivity depending on the application.

### Citation List

### Patent Documents

Patent Document 1: JP-A-S55-28896
Patent Document 2: JP-A-2019-35005

### Summary of Invention

### Technical Problem

An object of the present invention is to obtain an ethylene-based polymer composition useful as a material for shaped articles having a low surface resistivity and a low volume resistivity and exhibiting excellent slidability.

### Solution to Problem

The present invention pertains to an ethylene-based polymer composition comprising an ethylene-based polymer (A) and a carbon-based filler (C), the ethylene-based polymer composition having a melt flow rate (MFR) in the range of 0.1 to 20 g/10 min as measured in accordance with JIS K7210-1: 2014 at a measurement temperature of 230°C under a load of 10 kgf.

### Advantageous Effects of Invention

The ethylene-based polymer composition of the present invention includes a carbon-based filler (C) and thus exhibits a low surface resistivity and a low volume resistivity, and also has good thermal conductivity. A shaped article obtained from the ethylene-based polymer composition has good slidability and is rigid to find use in various machine parts and sliding materials.

### Description of Embodiments

### <Ethylene-based polymers (A)>

An ethylene-based polymer (A) that is one of the components constituting an ethylene-based polymer composition of the present invention is a homopolymer of ethylene, or a copolymer of ethylene and an α-olefin. The polymer is based on ethylene and is generally called a high-pressure low-density polyethylene (HP-LDPE), a linear low-density polyethylene (LLDPE), a medium-density polyethylene (MDPE), a high-density polyethylene (HDPE) or an ultrahigh-molecular weight polyethylene.

When the ethylene-based polymer (A) according to the present invention is a copolymer, the polymer may be a random copolymer or a block copolymer.

The α-olefin that is copolymerized with ethylene is preferably a C3-C20 α-olefin, with specific examples including propylene, 1-butene, 4-methyl-1-pentene-1, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-nonadecene, 1-eicosene, 9-methyl-1-decene, 11-methyl-1-dodecene and 12-ethyl-1-tetradecene. The α-olefins may be used singly, or two or more may be used in combination.

The ethylene-based polymer (A) according to the present invention may be a single polymer, or a composition (a mixture) of two or more kinds of ethylene-based polymers.

Furthermore, the ethylene-based polymer (A) according to the present invention may be such that part of the ethylene-based polymer (A) is modified with a polar compound, or may include an ethylene-based polymer modified with a polar compound.

The ethylene-based polymer (A) according to the present invention may be modified by various known methods. For example, a method may be adopted in which the ethylene-based polymer (A) is dissolved into an organic solvent, subsequently a polar compound such as an unsaturated carboxylic acid or a derivative thereof, and optionally a radical initiator such as an organic peroxide are added to the solution obtained, and the resulting mixture is reacted usually at a temperature of 60 to 350°C, preferably 80 to 190°C, for 0.5 to 15 hours, preferably 1 to 10 hours. Alternatively, a method may be adopted in which the ethylene-based polymer (A), an unsaturated carboxylic acid or a derivative thereof, and optionally a radical initiator such as an organic peroxide are added to a device such as an extruder, and the resulting mixture is reacted in the absence of a solvent usually at a temperature equal to or higher than the melting point of the ethylene-based polymer (A), preferably 160 to 350°C, for 0.5 to 10 minutes.

When the ethylene-based polymer (A) according to the present invention includes a modified ethylene-based polymer, the amount thereof is usually in the range of 0.5 mass% to 6 mass%, and, based on the whole of the ethylene-based polymer composition described later, is preferably in the range of 0.5 mass% to 4 mass%.

When the ethylene-based polymer composition of the present invention described later includes a modified ethylene-based polymer, the wettability between the ethylene-based polymer (A) and a carbon-based filler (C) is improved to offer further enhancements in tensile strength at break, flexural strength, flexural modulus, dynamic friction coefficient and specific wear rate.

The ethylene-based polymer (A) according to the present invention is more preferably an ultrahigh-molecular weight polyethylene having an intrinsic viscosity [η] measured in decalin solvent at 135°C (hereinafter, also written simply as the "intrinsic viscosity [η]") of 10 to 40 dl/g.

When the above ultrahigh-molecular weight polyethylene is used as the ethylene-based polymer (A) according to the present invention, the ethylene-based polymer (A) may be a composition of two or more kinds of ethylene-based polymers including the above ultrahigh-molecular weight polyethylene and a low-molecular weight to high-molecular weight ethylene-based polymer having an intrinsic viscosity [η] of 0.1 to 9 dl/g.

Furthermore, the ethylene-based polymer (A) according to the present invention may be a composition (a mixture) described below that comprises two or more kinds of ethylene-based polymers.

An ethylene-based polymer composition comprising 10 to 90 mass% of an ethylene-based polymer composition (A-I) and 90 to 10 mass% of an ethylene-based polymer composition (A-II) [where the total of (A-I) + (A-II) is 100 mass%],
wherein the ethylene-based polymer composition (A-I) is an ethylene polymer composition comprising:
   more than 35 mass% and 90 mass% or less of an ultrahigh-molecular weight ethylene-based polymer (a component (a-1)) having an intrinsic viscosity [η] of 10 to 40 dl/g, and
   10 mass% or more and less than 65 mass% of a low-molecular weight to high-molecular weight ethylene-based polymer (a component (a-2)) having an intrinsic viscosity [η] of 0.1 to 9 dl/g,
   based on the total mass of the component (a-1) and the component (a-2);
wherein the ethylene-based polymer composition (A-I) has a density of 930 to 980 kg/m³ and an intrinsic viscosity [η] of 3.0 to 10.0 dl/g; and
wherein the ethylene-based polymer composition (A-II) comprises an ethylene (co)polymer having at least an intrinsic viscosity [η] of 0.1 to 2.9 dl/g.

It is more preferable that the ethylene-based polymer composition (A-II) comprise an ethylene-based polymer having a density of 820 to 980 kg/m³ and an intrinsic viscosity [η] of 0.1 to 2.9 dl/g.

The blending ratio of the ethylene-based polymer composition (A-II) to the ethylene-based polymer composition (A-I) is 85 to 10 mass% of the ethylene-based polymer composition (A-II) to 15 to 90 mass% of the ethylene-based polymer composition (A-I), preferably 80 to 20 mass% of the ethylene-based polymer composition (A-II) to 20 to 80 mass% of the ethylene-based polymer composition (A-I), and more preferably 73.3 to 51 mass% of the ethylene-based polymer composition (A-II) to 26.7 to 49 mass% of the ethylene-based polymer composition (A-I).

### <Ethylene-based polymer compositions (A-I)>

The ethylene-based polymer composition (A-I) comprises the component (a-1) and the component (a-2). The ultrahigh-molecular weight ethylene-based polymer (the component (a-1)) that constitutes this composition is an ethylene-based polymer having an intrinsic viscosity [η] measured in decalin solvent at 135°C in the range of 10 to 40 dl/g, preferably 15 to 35 dl/g, more preferably 20 to 35 dl/g, and can be obtained in the first stage of polymerization.

On the other hand, the low-molecular weight to high-molecular weight ethylene-based polymer (the component (a-2)) is an ethylene-based polymer having an intrinsic viscosity [η] similarly measured in decalin solvent at 135°C in the range of 0.1 to 9 dl/g, preferably 0.1 to 5 dl/g, more preferably 0.5 to 3 dl/g, still more preferably 1.0 to 2.5 dl/g, and can be obtained in the second stage of polymerization after the polymerization of the ultrahigh-molecular weight ethylene-based polymer. The ethylene-based polymer composition (A-I), which comprises the component (a-1) and the component (a-2), may be produced by polymerizing ethylene and optionally an α-olefin in multiple stages in the presence of a catalyst. The multi-stage polymerization may be performed by a method similar to the polymerization method described in JP-A-H02-289636.

The use of the ultrahigh-molecular weight ethylene-based polymer (the component (a-1)) having an intrinsic viscosity [η] in the above range imparts excellent properties such as wear resistance, self-lubricating properties, impact strength and chemical resistance to shaped articles that are obtained.

The polymerization of the ultrahigh-molecular weight ethylene-based polymer (the component (a-1)) is followed by the polymerization of the low-molecular weight to high-molecular weight ethylene-based polymer (the component (a-2)) having an intrinsic viscosity [η] in the above-described range. In this manner, the compatibility with the ethylene-based polymer composition (A-II) is enhanced and consequently the ultrahigh-molecular weight ethylene-based polymer is allowed to be uniformly dispersed and bonded. Thus, the ethylene-based polymer composition that is obtained attains an excellent balance of characteristics such as wear resistance, self-lubricating properties, impact strength, chemical resistance, appearance and shaping properties, and is especially excellent in the balance of wear resistance, appearance and shaping properties.

By having the component (a-1) having a high intrinsic viscosity and the low-molecular weight to high-molecular weight ethylene-based polymer (the component (a-2)) having an intrinsic viscosity [η] in the above-described range, the ethylene-based polymer composition (A-I) allows the carbon-based filler (C) to be easily dispersed and allows the carbon-based filler (C) to be contained in an amount sufficient to offer conductivity.

In the present invention, the ethylene-based polymer composition (A-I) that comprises the component (a-1) and the component (a-2) contains the ultrahigh-molecular weight ethylene-based polymer (the component (a-1)) and the low-molecular weight to high-molecular weight ethylene-based polymer (the component (a-2)) in a specific ratio.

Specifically, the ethylene-based polymer composition (A-I) comprising the component (a-1) and the component (a-2) contains the ultrahigh-molecular weight ethylene-based polymer (the component (a-1)) in an amount of more than 35 mass% and 90 mass% or less, and the low-molecular weight to high-molecular weight ethylene-based polymer (the component (a-2)) in an amount of 10 mass% or more and less than 65 mass%.

By controlling the proportions of the ultrahigh-molecular weight ethylene-based polymer (the component (a-1)) and the low-molecular weight to high-molecular weight ethylene-based polymer (the component (a-2)) to fall in the above ranges, the ultrahigh-molecular weight ethylene-based polymer is obtained as large particles, and the compatibility with the ethylene-based polymer composition (A-II) is enhanced. Thus, the ethylene-based polymer composition that is obtained attains superior wear resistance, appearance and shaping properties.

The ethylene-based polymer composition (A-I) comprising the component (a-1) and the component (a-2) more preferably contains the component (a-1) in an amount of more than 40 mass% and 80 mass% or less, still more preferably 41 to 75 mass%, and more preferably contains the component (a-2) in an amount of 20 mass% or more and less than 60 mass%, still more preferably 25 to 59 mass%.

The ethylene-based polymer composition (A-I) comprising the component (a-1) and the component (a-2) substantially includes the ultrahigh-molecular weight polyethylene (the component (a-1)) and the low-molecular weight to high-molecular weight polyethylene (the component (a-2)).

Therefore, the content of the ultrahigh-molecular weight polyethylene (the component (a-1)) plus the content of the low-molecular weight to high-molecular weight polyethylene (the component (a-2)) usually represent 100 mass% of the ethylene-based polymer composition (A-I) comprising the component (a-1) and the component (a-2). The composition, however, may further contain additives added to usual polyolefins (such as, for example, stabilizers including heat stabilizers and weather stabilizers, crosslinking agents, crosslinking auxiliaries, antistatic agents, slip agents, antiblocking agents, antifogging agents, lubricants, dyes, pigments, fillers, mineral oil-based softeners, petroleum resins, waxes and compatibilizers) as long as the object of the present invention is not impaired.

The ethylene-based polymer composition (A-I) comprising the component (a-1) and the component (a-2), or, as described above, substantially consisting of the ultrahigh-molecular weight ethylene-based polymer and the low-molecular weight to high-molecular weight ethylene-based polymer has a density measured in accordance with ASTM D1505 in the range of 930 to 980 kg/m³, preferably 940 to 980 kg/m³.

Furthermore, the ethylene-based polymer composition (A-I) comprising the component (a-1) and the component (a-2) has an intrinsic viscosity [η] measured in decalin solvent at 135°C in the range of 3.0 to 10.0 dl/g, preferably 3.0 to 8.0 dl/g, more preferably 3.0 to 7.0 dl/g.

The ethylene-based polymer composition (A-I) comprising the component (a-1) and the component (a-2) has a density described above. As a result of this configuration, shaped articles that are obtained have a low dynamic friction coefficient and exhibit excellent self-lubricating properties.

Furthermore, the ethylene-based polymer composition (A-I) comprising the component (a-1) and the component (a-2) has an intrinsic viscosity [η] in the range described above. As a result of this configuration, the ethylene-based polymer composition (A-I) comprising the component (a-1) and the component (a-2), and the ethylene-based polymer composition (A-II) are favorably dispersed.

That is, the low-molecular weight to high-molecular weight ethylene-based polymer contained in the ethylene-based polymer composition (A-I) comprising the component (a-1) and the component (a-2), and the ethylene-based polymer composition (A-II) melt-blended in a device such as an extruder are finely dispersed with each other to achieve a uniformly dispersed state in the resultant ethylene-based polymer composition. Thus, shaped articles that are obtained using such a composition attain excellent properties such as wear resistance, self-lubricating properties, impact strength, chemical resistance, appearance and shaping properties.

The ethylene-based polymer composition (A-I) may be blended with other polymer to offer enhancements in properties such as wear resistance and self-lubricating properties, and may be suitably used as a resin modifier. The polymer to be modified is not limited, but is suitably the ethylene-based polymer composition (A-II).

### <Ethylene-based polymer compositions (A-II)>

The ethylene-based polymer composition (A-II) according to the present invention is not particularly limited as long as the composition comprises an ethylene-based polymer having at least an intrinsic viscosity [η] of 0.1 to 2.9 dl/g. Examples of the ethylene-based polymers include high-pressure polyethylene (HP-LDPE), linear low-density polyethylene (LLDPE), medium-density polyethylene (MDPE), high-density polyethylene (HDPE), ethylene·α-olefin copolymers, ethylene-vinyl alcohol copolymer, ethylene-vinyl acetate copolymer, ethylene-vinyl acetate copolymer saponified product, ethylene·(meth)acrylic acid copolymer, and ethylene·α-olefin·diene (triene, polyene) ternary copolymers. Here, examples of the α-olefins include those having 3 to 20 carbon atoms such as propylene, 1-butene, 1-pentene, 1-hexene, 1-octene, 1-decene, 1-dodecene, 4-methyl-1-pentene and 3-methyl-1-pentene. Examples of the dienes (the trienes, the polyenes) include 5-ethylidene-2-norbornene, vinyl norbornene, and other conjugated or nonconjugated dienes, trienes and polyenes.

The ethylene-based polymer may be a single polymer, or may be a composition of two or more kinds of ethylene-based polymers. Alternatively, the ethylene-based polymer may be used as a composition with other polyolefin such as polypropylene or polybutene.

The ethylene-based polymer composition (A-II) according to the present invention has a density of 820 to 980 kg/m³, preferably 850 to 970 kg/m³, and more preferably 860 to 960 kg/m³, and has an intrinsic viscosity [η] of 0.1 to 2.9 dl/g, preferably 0.3 to 2.8 dl/g, and more preferably 0.5 to 2.5 dl/g.

Preferred examples of the polymers contained in the ethylene-based polymer composition (A-II) according to the present invention include the ethylene-based polymers that are described hereinabove and have a density of 820 to 980 kg/m³ and an intrinsic viscosity [η] of 0.1 to 10 dl/g, compositions of polypropylene and an ethylene·α-olefin·diene copolymer, and ethylene-vinyl alcohol copolymer.

The ethylene-based polymer composition (A-II) according to the present invention is a composition that includes an ethylene-based polymer having at least an intrinsic viscosity [η] of 0.1 to 10 dl/g. As a result of this configuration, the composition is favorably dispersed with the ethylene-based polymer composition (A-I) comprising the component (a-1) and the component (a-2). That is, when melt-blended in a device such as an extruder, the ethylene-based polymer composition (A-II), and the low-molecular weight to high-molecular weight ethylene-based polymer contained in the ethylene-based polymer composition (A-I) comprising the component (a-1) and the component (a-2) are finely dispersed with each other to achieve a uniformly dispersed state in the resultant polymer composition. Thus, shaped articles that are obtained using such a composition attain excellent properties such as wear resistance, self-lubricating properties, impact strength, chemical resistance, appearance, flexibility and shaping properties.

The ethylene-based polymer composition (A-II) according to the present invention may contain additives added to usual polyolefins (such as, for example, stabilizers including heat stabilizers and weather stabilizers, crosslinking agents, crosslinking auxiliaries, antistatic agents, slip agents, antiblocking agents, antifogging agents, lubricants, dyes, pigments, fillers, mineral oil-based softeners, petroleum resins, waxes and compatibilizers) as long as the object of the present invention is not impaired.

### <Carbon-based fillers (C)>

Examples of the carbon-based filler (C) that is one of the components constituting the ethylene-based polymer composition of the present invention include carbon nanotubes (CNT), conductive carbon blacks (CB) and carbon fibers. The carbon-based filler (C) is not particularly limited as long as it is any of these, which are conductive. Among those described above, carbon nanotubes are preferable because they effectively lower the surface electrical resistivity of shaped articles.

Carbon nanotubes are a cylindrical hollow fibrous material made of carbon, and may be any of multi-walled carbon nanotubes and single-walled carbon nanotubes.

The average diameter of the carbon nanotubes is preferably 1 nm or more, more preferably 5 nm or more, and still more preferably 7 nm or more, and is preferably 20 nm or less. The average length of the carbon nanotubes is preferably 0.5 µm or more, and more preferably 0.6 µm, and is preferably 50 µm or less, more preferably 30 µm or less, and still more preferably 15 µm or less. When the average diameter is 1 nm or more, the carbon nanotubes tend to resist breakage during kneading. When the average diameter is 20 nm or less, the carbon nanotubes tend to exhibit high conductivity. When the average length is 0.5 µm or more, the conductivity tends to be enhanced. When the average length is 50 µm or less, the increase in viscosity during kneading tends to be reduced, and kneading and shaping tend to be facilitated.

The average diameter and the average length of the carbon nanotubes may be determined by observing the carbon nanotubes with an electron microscope (SEM, TEM) and arithmetically averaging the dimensions.

The carbon nanotubes may be produced by, for example, an arc discharge method, a chemical vapor deposition method (a CVD method), or a laser ablation method. Commercial carbon nanotubes may also be used.

Carbon nanotubes tend to show high conductivity in a relatively small dose compared to, for example, carbon black. Because carbon nanotubes are expensive, a smaller dose is advantageous from the viewpoint of cost. In the present embodiment, the ethylene-based polymer composition containing the carbon-based filler (C) and the ethylene-based polymer (A) can exhibit excellent conductivity and tends to attain high conductivity even with a small amount of carbon nanotubes.

Examples of the conductive carbon blacks include furnace black, Ketjen black, channel black, lamp black, thermal black and acetylene black. Specific examples include HAF-LS, HAF, HAF-HS, FEF, GPF, APF, SRF-LM, SRF-HM and MT.

The primary particle size of the conductive carbon black is preferably 0.005 um or more, and more preferably 0.01 um or more, and is preferably 1 um or less, and more preferably 0.2 um or less. The primary particle size is an average of the particle sizes measured with, for example, an electron microscope.

The carbon fibers used herein may be any of various known carbon fibers, with examples including polyacrylonitrile-based carbon fibers, rayon-based carbon fibers, pitch-based carbon fibers, polyvinyl alcohol-based carbon fibers, regenerated cellulose-based carbon fibers, and pitch-based carbon fibers produced from mesophase pitches. The carbon fibers are excellent in specific strength and are therefore advantageous in applications where light weight and strength are important, for example, aircraft.

The carbon fibers may be general-purpose fibers or high-strength fibers. Furthermore, the carbon fibers may be long fibers, short fibers, chopped fibers or recycled fibers.

For example, the carbon fiber sizing agent (the sizing agent) that is used may be any sizing agent such as a urethane-based emulsion, an epoxy-based emulsion, a nylon-based emulsion or an olefin-based emulsion.

The average length of the carbon fibers, that is, the average fiber length is preferably 0.1 mm or more, more preferably 0.3 mm or more, and still more preferably 0.5 mm or more, and is preferably 15.0 mm or less, and more preferably 13.0 mm or less. When the average fiber length is 0.1 mm or more, the carbon fibers tend to enhance mechanical properties sufficiently effectively. When the average fiber length is 15.0 mm or less, the carbon fibers tend to be favorably dispersed in the ethylene-based polymer composition to offer a good appearance.

The average diameter of the carbon fibers is preferably 3 µm or more, and more preferably 5 um or more, and is preferably 30 µm or less, more preferably 21 µm or less, and still more preferably 19 µm or less. When the average diameter of the carbon fibers is 3 µm or more, the carbon fibers tend to resist breakage during shaping, and shaped articles that are obtained tend to attain high impact strength. When the average diameter of the carbon fibers is 30 µm or less, shaped articles tend to have a good appearance, and, because the aspect ratio of the carbon fibers is not lowered, the carbon fibers tend to enhance mechanical properties such as rigidity and heat resistance of shaped articles sufficiently effectively.

The carbon-based fillers (C) may be used singly, or two or more may be used in combination.

### <Compositions of ethylene-based polymers>

An ethylene-based polymer composition of the present invention is a composition containing the ethylene-based polymer (A) and the carbon-based filler (C) described hereinabove. Preferably, the content of the ethylene-based polymer (A) is in the range of 70 to 99.9 mass%, more preferably 85.0 to 99.9 mass%, and the content of the carbon-based filler (C) is in the range of 0.1 to 30 mass%, preferably 0.1 to 15.00 mass% [where the total of (A) + (C) is 100 mass%].

The ethylene-based polymer composition of the present invention includes the carbon-based filler (C), and thus shaped articles obtained therefrom exhibit slidability and further have high conductivity.

The ethylene-based polymer composition according to the present invention usually has a MFR in the range of 0.1 to 20 g/10 min, preferably 1 to 20 g/10 min, as measured in accordance with JIS K 7210-1: 2014 at 230°C under 10 kgf load.

Where necessary, the ethylene-based polymer composition of the present invention may further include a polyamide in addition to the carbon-based filler (C).

### <Polyamides>

Examples of the polyamides according to the present invention include polyamide 6, polyamide 66, polyamide 11, polyamide 12, polyamide 610, polyamide 612, polyamide 614, polyamide 6T, polyamide 6I, polyamide 9T, polyamide M5T, polyamide 1010, polyamide 1012, polyamide 10T, polyamide MXD6, polyamide 6T/66, polyamide 6T/6I, polyamide 6T/6I/66, polyamide 6T/2M-5T and polyamide 9T/2M-8T.

The polyamide that is used may be a block copolymer containing a polyamide component. Examples of the block copolymers containing a polyamide component include polyamide elastomers that are block copolymers using a polyether diol or a polyester diol. Examples of the polyether diols include polytetramethylene ether glycol and polyoxypropylene glycol.

The polyamides may be used singly, or two or more may be used in combination. When the ethylene-based polymer composition of the present invention includes the polyamide, the carbon-based filler (C) is easily dispersed in the ethylene-based polymer (A), with the result that wear resistance and conductivity are further enhanced.

When the ethylene-based polymer composition of the present invention includes the polyamide, the amount thereof is preferably in the range of 1.0 to 30 mass%. The content of the polyamide is more preferably 5 mass% or more. The content of the polyamide is more preferably 20 mass% or less.

Where necessary, the ethylene-based polymer composition of the present invention may contain other components as long as the object of the present invention is not impaired. Examples of such additional components include various additives usually used for polyolefins such as heat stabilizers, weather stabilizers, UV absorbers, light stabilizers, inorganic fillers (except the carbon-based fillers (C)) including talcs, calcium carbonate, metal powders, titanium oxide and zinc oxide, waxes, lubricants, slip agents, nucleating agents, antiblocking agents, antistatic agents, antifogging agents, pigments, dyes, dispersants, flame retardants, flame retardant aids, plasticizers and compatibilizers; and additional polymers such as elastomers and other impact strength modifiers.

When the ethylene-based polymer composition of the present invention includes the additive(s) or the polymer(s) described above, the amount thereof is not particularly limited but is usually in the range of 0.01 to 30 mass%.

The ethylene-based polymer composition of the present invention preferably includes a wax as an additional component. The type of the wax is not particularly limited, but a polyethylene-based wax or a polypropylene-based wax is preferable.

A wax contained in the ethylene-based polymer composition of the present invention probably suppresses the aggregation of the carbon-based filler (C) in the ethylene-based polymer (A) and thus facilitates kneading, with the result that the carbon-based filler is easily dispersed in the ethylene-based polymer (A). Thus, the ethylene-based polymer composition that is obtained attains high conductivity. Furthermore, a wax will make it easy to knead an increased amount of the carbon-based filler (C) in the ethylene-based polymer (A).

When the ethylene-based polymer composition of the present invention includes a wax, the amount thereof is usually in the range of 0.01 to 10 mass%.

### <Methods for producing ethylene-based polymer compositions>

The ethylene-based polymer composition of the present invention may be obtained by a conventionally known production method, for example, by dry-blending the components including the ethylene-based polymer (A), the carbon-based filler (C), and optionally the polyamide or the additives described hereinabove, subsequently melt-kneading the resulting blend with a single-screw or twin-screw extruder, extruding the kneaded product into a strand, and cutting the strand into pellets. Such components as the carbon-based filler (C) and an inorganic filler may be used as a masterbatch by being mixed beforehand with a polymer component such as the ethylene-based polymer (A).

### <Shaped articles>

A shaped article of the present invention includes the ethylene-based polymer composition described hereinabove. Specific examples of the methods (shaping methods) for producing the shaped articles include conventionally known shaping methods for polyolefins, for example, known thermal forming methods such as extrusion, injection molding, film forming, blown-film extrusion, blow molding, extrusion blow molding, injection blow molding, press molding, vacuum forming, powder slush molding, calendering and expansion molding. The shaped article including the ethylene-based polymer composition may be obtained by processing the ethylene-based polymer composition preferably by injection molding. The shaped article is preferably a shaped article that includes the ethylene-based polymer composition containing carbon nanotubes as the carbon-based filler (C).

The density of the shaped article of the ethylene-based polymer composition was measured in water at 23°C by a submerged weighing method in accordance with JIS Z8807: 2012.

In general, an injection-molded article tends to have lower conductivity (higher surface electrical resistivity) than a press-molded article. The ethylene-based polymer composition of the present invention can exhibit sufficiently high conductivity even when injection-molded. That is, the ethylene-based polymer composition of the present invention can give a shaped article having excellent conductivity regardless of the type of the shaping method.

The shaped article may be a shaped article formed from the ethylene-based polymer composition, or may be a shaped article that has a portion, for example, a skin layer, formed from the ethylene-based polymer composition.

Furthermore, the shaped articles including the ethylene-based polymer composition of the present invention are also excellent in mechanical properties.

Specifically, for example, the shaped articles may be used in a wide range of applications from household items such as daily necessities and recreational products to general industrial applications and industrial products. Examples include home appliance material parts, communication equipment parts, electrical parts, electronic parts, automobile parts, other vehicle parts, ships, aircraft materials, machinery parts, building material-related members, civil engineering members, agricultural materials, power tool parts, food containers, films, sheets and fibers.

Furthermore, the shaped articles of the present invention may be used widely in conventionally known polyethylene applications. In particular, because of having an excellent balance in characteristics such as wear resistance, self-lubricating properties, impact strength and thin-wall shaping properties, the shaped articles of the present invention are used in applications that require those characteristics, such as, for example, covering (laminating) materials for metals such as steel pipes or tubes, electric wires and automobile sliding door rails; covering (laminating) materials for various rubbers such as pressure-resistant rubber hoses, automobile door gaskets, clean room door gaskets, automobile glass run channels and automobile weather strips; lining applications such as hoppers and chutes; and sliding materials such as gears, bearings, rollers, tape reels, various guide rails and elevator rail guides, and various protective liner materials.

The shaped articles of the present invention have excellent conductivity and can reduce or eliminate buildup of electrostatic charges on various mechanical parts and sliding members, thus finding suitable use in applications requiring the prevention of static buildup.

### EXAMPLES

Hereinbelow, the present invention will be described in greater detail based on Examples. However, it should be construed that the scope of the present invention is not limited to those Examples. In the description of the following Examples and other experiments, "parts" means "parts by mass" unless otherwise specified.

In Examples and Comparative Examples of the present invention, the following ethylene-based polymer (A) and the following carbon-based filler (C) were used.

### (1) Ethylene-based polymer (A)

### (1.1) Ethylene-based copolymer composition (A-1)

An ethylene-based polymer composition (A-I-1) (intrinsic viscosity [η]: 4.4 dl/g) was provided that had been obtained by two-stage polymerization of an ultrahigh-molecular weight polyethylene (a component (a-1)) having an intrinsic viscosity [η] of 30 dl/g and a low-molecular weight polyethylene (a component (a-2)) having an intrinsic viscosity [η] of 1.5 dl/g in a mass ratio of 41/59. To the ethylene-based polymer composition (A-I-1) was added a high-density low-molecular weight polyethylene having an intrinsic viscosity [η] of 1.1 dl/g and a density of 965 kg/m³ (produce name: HI-ZEX 1700JP, manufactured by Prime Polymer Co., Ltd.) as an ethylene-based polymer composition (A-II-1) in a mass ratio of 49/51 so that the concentration of the ultrahigh-molecular weight polyethylene (the component (a-1)) in an ethylene-based polymer composition (A-1) would be 20 mass%. The resulting mixture was melt-blended using twin-screw extruder PCM manufactured by Ikegai Corp. Pellets of an ethylene-based copolymer composition (A-1) were thus obtained.

The ethylene-based copolymer composition (A-1) with an intrinsic viscosity [η] of 3.0 dl/g that was obtained by the above production method was used as an ethylene-based polymer (A) .

### (1.2) Ethylene-based copolymer (B-1)

A high-density low-molecular weight polyethylene having an intrinsic viscosity [η] of 1.1 dl/g and a density of 965 kg/m³ (produce name: HI-ZEX 1700J, manufactured by Prime Polymer Co., Ltd.) was used.

### (2) Carbon-based filler (C)

### (2.1) Carbon-based filler (C-1)

Carbon nanotubes, produce name: Carbon nanotubes NC7000, manufactured by Nanocyl SA., were used as a carbon-based filler (C-1). The carbon nanotubes had an average diameter of 9.5 nm and an average length of 1.5 µm.

### (2.2) Preparation of carbon-based filler (C-1)-containing masterbatch (1)

15 mass% of the carbon-based filler (C-1), 75 mass% of the ethylene-based copolymer composition (A-1) and 10 mass% of a wax were mixed together to give a masterbatch (1).

### (2.3) Preparation of carbon-based filler (C-1)-containing masterbatch (2)

15 mass% of the carbon-based filler (C-1), 75 mass% of the ethylene-based copolymer (B-1) and 10 mass% of a wax were mixed together to give a masterbatch (2).

Properties of the ethylene-based polymer composition were measured by the following methods.

### [Method for measuring intrinsic viscosity [η]]

In accordance with ASTM D4020, the ethylene-based polymer composition was dissolved into decalin, and the intrinsic viscosity measured at 135°C was defined as [η].

### [Method for measuring density]

The density of the ethylene-based copolymer composition before the addition of the carbon-based filler was measured by a density gradient method in accordance with ASTM D1505.

### [Example 1]

The ethylene-based copolymer composition (A-1): 90 mass%, and the carbon-based filler (C-1)-containing masterbatch (1): 10 mass% were dry-blended. The resulting dry blend was added to a hopper of twin-screw extruder BT30 manufactured by Research Laboratory of Plastics Technology Co., Ltd., and was melt-kneaded at 230°C to give pellets of an ethylene-based polymer composition.

The MFR of the ethylene-based polymer composition obtained was measured by the following method.

In accordance with JIS K7210-1: 2014, the melt flow rate (MFR) was measured at a measurement temperature of 230°C under a load of 10 kgf to be 16.2 g/10 min.

The pellets of the ethylene-based polymer composition were added to a hopper of injection molding machine Toshiba 75 Ton manufactured by Toshiba Machine Co., Ltd. The pellets were melted at 230°C, and the melt was injection-molded into a 30°C mold at an injection pressure of 90 MPa and a holding pressure of 75 MPa. A multipurpose test specimen Type-A conforming to ISO 3167: 93, and a 300 mm × 300 mm × 3 mm thick flat plate were thus fabricated.

Separately, a hydraulic hot press machine manufactured by Shinto Metal Industries, Ltd. was set at 230°C, and the pellets of the ethylene-based polymer composition were preheated for 8 minutes and were pressed at 10 MPa for 3 minutes. The sheet was transferred to another hydraulic press machine manufactured by Shinto Metal Industries, Ltd. that had been preset at 20°C, and was cold-pressed for 5 minutes. A 1 mm thick pressed sheet test specimen was thus prepared. A 5 mm thick brass plate was used as the hot plate.

Properties of the ethylene-based polymer composition obtained were measured by the following methods.

The results are described in Table 1.

### [Density]

The density of the shaped article of the ethylene-based polymer composition was measured in water at 23°C by a submerged weighing method in accordance with JIS Z8807: 2012.

### [Tensile strength at break and tensile elongation at break]

A test specimen having a shape described in JIS K7162 1A was tested in accordance with ISO 527-1 and 2 at a stress rate of 50 mm/min to determine the tensile strength at break and the tensile elongation at break.

### [Flexural strength and flexural modulus]

In accordance with ISO 178, a test specimen 80 mm (in length), 10 mm (in width) and 4 mm (in thickness) was tested with a span distance of 64 mm at a test speed of 2 mm/min to determine the flexural strength and the flexural modulus.

### [Dynamic friction coefficient and specific wear rate]

In accordance with JIS K7218, "Testing Method A for Sliding Wear Resistance of Plastics", the dynamic friction coefficient and the specific wear rate were measured with a Matsubara-type friction wear tester to evaluate the slidability and the wear resistance.

The testing conditions were mating material: S45C, speed: 50 cm/sec, distance: 3 km, load: 15 kg, and measurement environment temperature: 23°C.

### [Surface resistivity and volume resistivity]

The 1 mm thick pressed sheet of the ethylene-based polymer composition was tested with digital ultrahigh resistance/minute current electrometer 8340A manufactured by ADC CORPORATION by a guarded-electrode method at 23°C under the conditions where humidity: 50%, applied voltage: 500 V, and application time: 60 seconds.

When the measurement of surface resistivity resulted in a level below 1.0 × 10⁷, measurement was performed in accordance with JIS K7194: 1994 using low resistivity meter Loresta-GX-MCP-T700 manufactured by Nittoseiko Analytech Co., Ltd. under the conditions where applied current: 1 mA, application time: 10 seconds, 23°C, and humidity: 50%.

### [Examples 2 and 3]

An ethylene-based polymer composition was obtained in the same manner as in Example 1, except that the ethylene-based polymer composition used in Example 1 was replaced by an ethylene-based polymer composition prepared while changing the amounts of the ethylene-based copolymer composition (A-1) and the carbon-based filler (C-1)-containing masterbatch (1) as described in Table 1. The ethylene-based polymer composition obtained was evaluated by the same methods as in Example 1.

The results are described in Table 1.

### [Example 4]

An ethylene-based polymer composition was obtained in the same manner as in Example 1, except that the ethylene-based polymer composition used in Example 1 was replaced by an ethylene-based polymer composition prepared while changing the amounts of the ethylene-based copolymer composition (A-1) and the carbon-based filler (C-1)-containing masterbatch (1) as described in Table 1. The ethylene-based polymer composition obtained was evaluated by the same methods as in Example 1.

The results are described in Table 1.

### [Example 5]

The ethylene-based copolymer composition (A-1): 50 mass%, the carbon-based filler (C-1)-containing masterbatch (1): 40 mass%, and polyamide 6 (produce name: Amilan CM1007 manufactured by TORAY INDUSTRIES, INC.): 10 mass% were dry-blended. The resulting dry blend was added to a hopper of twin-screw extruder BT30 manufactured by Research Laboratory of Plastics Technology Co., Ltd., and was melt-kneaded at 240°C to give pellets of an ethylene-based polymer composition.

The MFR of the ethylene-based polymer composition obtained was measured by the following method.

In accordance with JIS K7210-1: 2014, the melt flow rate (MFR) was measured at a measurement temperature of 230°C under a load of 10 kgf to be 7.6 g/10 min.

Next, the pellets of the ethylene-based polymer composition were added to a hopper of injection molding machine Toshiba 75 Ton manufactured by Toshiba Machine Co., Ltd. The pellets were melted at 230°C, and the melt was injection-molded into a 30°C mold at an injection pressure of 90 MPa and a holding pressure of 75 MPa. A multipurpose test specimen Type-A conforming to ISO 3167: 93, and a 300 mm × 300 mm × 3 mm thick flat plate were thus fabricated.

Separately, a hydraulic hot press machine manufactured by Shinto Metal Industries, Ltd. was set at 240°C, and the pellets of the ethylene-based polymer composition were preheated for 8 minutes and were pressed at 10 MPa for 3 minutes. The sheet was transferred to another hydraulic press machine manufactured by Shinto Metal Industries, Ltd. that had been preset at 20°C, and was cold-pressed for 5 minutes. A 1 mm thick pressed sheet test specimen was thus prepared. A 5 mm thick brass plate was used as the hot plate.

The results are described in Table 1.

### [Example 6]

An ethylene-based polymer composition was obtained in the same manner as in Example 1, except that the ethylene-based copolymer composition (A-1): 40 mass%, the carbon-based filler (C-1)-containing masterbatch (1): 40 mass%, and the polyamide 6: 20 mass% were used. The ethylene-based polymer composition obtained was evaluated by the same methods as in Example 1.

The results are described in Table 1.

### [Example 7]

### <Production of modified ethylene polymer composition>

The ethylene-based copolymer composition (A-1): 100 parts by mass, maleic anhydride: 0.8 parts by mass, and an organic peroxide [produce name: PERHEXYN-25B, manufactured by NOF CORPORATION]: 0.07 parts by mass were mixed together in a Henschel mixer. The resulting mixture was subjected to melt graft modification in a 65 mm-diameter single-screw extruder that had been preset at 250°C. A modified ethylene-based copolymer composition was thus obtained. The amount of maleic anhydride grafts in the modified polyolefin composition obtained was measured by IR analysis to be 0.8 mass%.

### <Production of ethylene-based polymer composition>

The ethylene-based copolymer composition (A-1): 38 mass%, the modified ethylene-based copolymer composition: 2 mass%, the carbon-based filler (C-1)-containing masterbatch (1): 40 mass%, and the polyamide 6: 20 mass% were dry-blended in the same manner as in Example 1 to give an ethylene-based polymer composition. The ethylene-based polymer composition obtained was evaluated by the same methods as in Example 1.

The results are described in Table 1.

### [Example 8]

The ethylene-based copolymer composition (A-1): 40 mass%, and the carbon-based filler (C-1)-containing masterbatch (1): 60 mass% were dry-blended. The resulting dry blend was added to a hopper of twin-screw extruder BT30 manufactured by Research Laboratory of Plastics Technology Co., Ltd., and was melt-kneaded at 250°C to give pellets of an ethylene-based polymer composition. The ethylene-based polymer composition obtained was evaluated by the same methods as in Example 1.

### [Comparative Example 1]

An ethylene-based polymer composition was obtained in the same manner as in Example 1, except that the ethylene-based polymer composition used in Example 1 was replaced by an ethylene-based polymer composition free from the carbon-based filler (C-1)-containing masterbatch (1). The ethylene-based polymer composition obtained was evaluated by the same methods as in Example 1.

The results are described in Table 1.

### [Comparative Example 2]

The ethylene-based copolymer composition (A-1): 80 mass%, and the carbon-based filler (C-1)-containing masterbatch (2): 20 mass% were dry-blended. The resulting dry blend was added to a hopper of twin-screw extruder BT30 manufactured by Research Laboratory of Plastics Technology Co., Ltd., and was melt-kneaded at 230°C to give pellets of an ethylene-based polymer composition. The ethylene-based polymer composition obtained was evaluated by the same methods as in Example 1.

The results are described in Table 1.

### [Comparative Example 3]

The ethylene-based copolymer (B-1: 80 mass%, and the carbon-based filler (C-1)-containing masterbatch (2): 20 mass% were dry-blended. The resulting dry blend was added to a hopper of twin-screw extruder BT30 manufactured by Research Laboratory of Plastics Technology Co., Ltd., and was melt-kneaded at 200°C to give pellets of an ethylene-based polymer composition. The ethylene-based polymer composition obtained was evaluated by the same methods as in Example 1.

The results are described in Table 1.

### [Comparative Example 4]

An ethylene-based polymer composition was obtained in the same manner as in Example 1, except that the ethylene-based polymer composition used in Example 1 was replaced by an ethylene-based polymer composition prepared while changing the amounts of the ethylene-based copolymer (B-1) and the carbon-based filler (C-1)-containing masterbatch (2) as described in Table 1. The ethylene-based polymer composition obtained was evaluated by the same methods as in Example 1.

The results are described in Table 1.

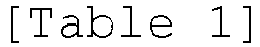

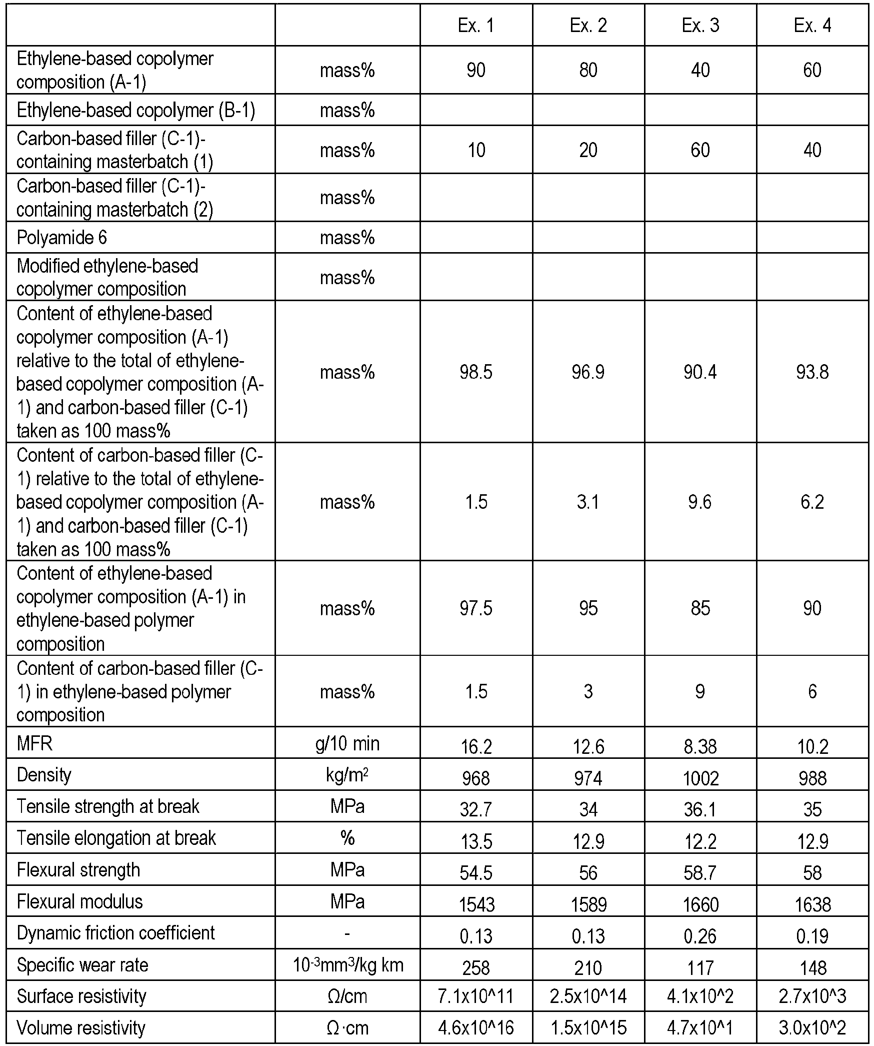

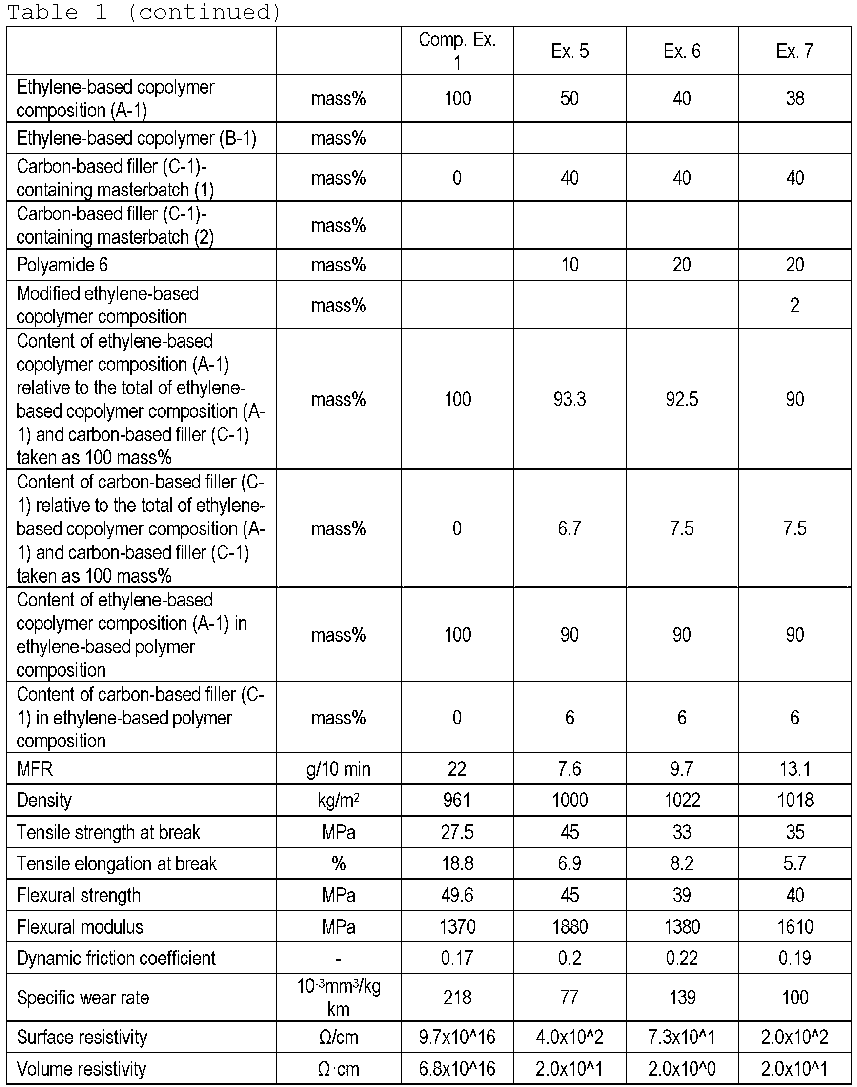

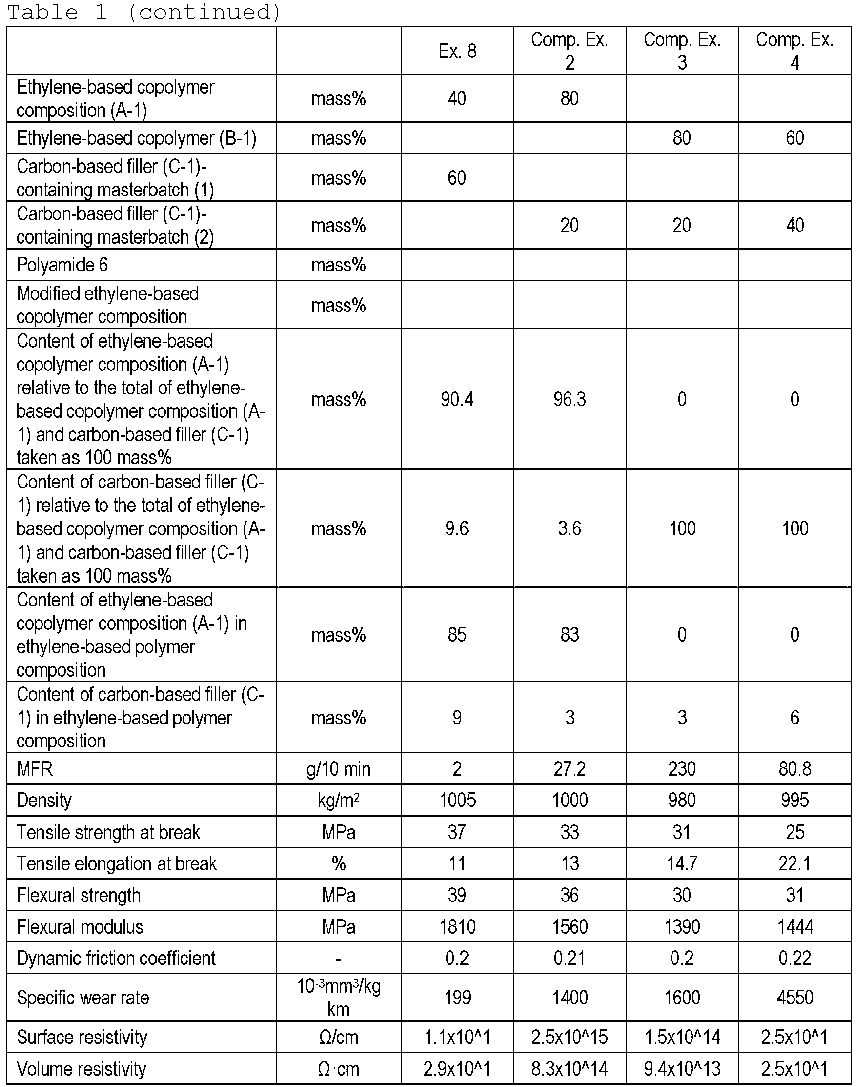

## Claims

1. An ethylene-based polymer composition comprising an ethylene-based polymer (A) and a carbon-based filler (C), the ethylene-based polymer composition having a melt flow rate (MFR) in the range of 0.1 to 20 g/10 min as measured in accordance with JIS K7210-1: 2014 at a measurement temperature of 230°C under a load of 10 kgf.

2. The ethylene-based polymer composition according to claim 1, wherein the content of the ethylene-based polymer (A) is 70 to 99.9 mass%, and the content of the carbon-based filler (C) is 0.1 to 30 mass% [where the total of (A) + (C) is 100 mass%].

3. The ethylene-based polymer composition according to claim 1 or 2, wherein the carbon-based filler (C) is carbon nanotube.

4. The ethylene-based polymer composition according to any one of claims 1 to 3, wherein the ethylene-based polymer (A) comprises an ethylene-based polymer having an intrinsic viscosity [η] in the range of 10 to 40 dl/g.

5. The ethylene-based polymer composition according to any one of claims 1 to 4,
wherein the ethylene-based polymer (A) is an ethylene-based polymer composition comprising an ethylene-based polymer composition (A-I) and an ethylene-based polymer composition (A-II);
wherein the ethylene-based polymer composition contains 10 to 90 mass% of the ethylene-based polymer composition (A-I) and 90 to 10 mass% of the ethylene-based polymer composition (A-II) [where the total of (A-I) + (A-II) is 100 mass%];
wherein the ethylene-based polymer composition (A-I) is an ethylene polymer composition comprising:
more than 35 mass% and 90 mass% or less of an ultrahigh-molecular weight ethylene-based polymer (a component (a-1)) having an intrinsic viscosity [η] of 10 to 40 dl/g, and
10 mass% or more and less than 65 mass% of a low-molecular weight to high-molecular weight ethylene-based polymer (a component (a-2)) having an intrinsic viscosity [η] of 0.1 to 9 dl/g,
based on the total mass of the component (a-1) and the component (a-2);
wherein the ethylene-based polymer composition (A-I) has a density of 930 to 980 kg/m³ and
an intrinsic viscosity [η] of 3.0 to 10.0 dl/g; and
wherein the ethylene-based polymer composition (A-II) comprises an ethylene (co)polymer having at least an intrinsic viscosity [η] of 0.1 to 2.9 dl/g.

6. The ethylene-based polymer composition according to any one of claims 1 to 5, further comprising a polyamide in an amount of 30 mass% or less [relative to the total of (A) + (C) + polyamide taken as 100 mass%].

7. A shaped article comprising the ethylene-based polymer composition described in any one of claims 1 to 6.

8. The shaped article according to claim 7, which is an injection-molded article.

9. The shaped article according to claim 7, which is a covering material.

10. The shaped article according to claim 7, which is a sliding material.
